# EUROPÄISCHE PATENTANMELDUNG

(11) **EP 4 716 201 A1**
(43) Veröffentlichungstag der Anmeldung: **25.03.2026**
(21) Anmeldenummer: 24201356.3
(22) Anmeldetag: 19.09.2024
(51) Int. Cl.: H04M 11/02

(54) **SPRECHSTELLENEINRICHTUNG ZUR VERWENDUNG IN EINER SPRECHANLAGENEINRICHTUNG**

(71) Anmelder: Industrialpartners GmbH, 64760 Oberzent (DE); CN-Consult GmbH, 35756 Mittenaar-Offenbach (DE)
(72) Erfinder: FRANKE, Henning, 68799 Reilingen (DE)
(74) Vertreter: Habermann Intellectual Property Partnerschaft von Patentanwälten mbB

(57) **Zusammenfassung**

Eine Sprechstelleneinrichtung (3) zur Verwendung in einer Sprechanlageneinrichtung weist ein ortsfest einbaubares Gehäuse (6), eine Übertragungsschnittstelle zur Übertragung von digitalen Sprachinformationsdaten zwischen der Sprechstelleneinrichtung (3) und einer Gegensprecheinrichtung, eine Wandlereinrichtung zur Umwandlung der digitalen Sprachinformationsdaten in analoge Sprachinformationsdaten und eine Schallwandlereinrichtung zur Umwandlung von analogen Sprachinformationsdaten in Schallwellen und umgekehrt auf. Die Sprechstelleneinrichtung (3) weist zusätzlich eine Sprachdatenwandlereinrichtung zur Umwandlung der Sprachinformationsdaten in einen drahtlos übertragbaren digitalen Sprachdatenstrom und eine Sprachdatenstromübertragungseinrichtung mit einer Antenneneinrichtung zur drahtlosen Abstrahlung des digitalen Sprachdatenstroms auf. Der abgestrahlte digitale Sprachdatenstrom kann den standardisierten Vorgaben von Niedrigenergie-Bluetooth entsprechen.

## Beschreibung

Die Erfindung betrifft eine Sprechstelleneinrichtung zur Verwendung in einer Sprechanlageneinrichtung, wobei die Sprechstelleneinrichtung ein ortsfest einbaubares Gehäuse, eine Übertragungsschnittstelle zur Übertragung von digitalen Sprachinformationsdaten zwischen der Sprechstelleneinrichtung und einer Gegensprecheinrichtung, eine Wandlereinrichtung zur Umwandlung der digitalen Sprachinformationsdaten in analoge Sprachinformationsdaten und eine Schallwandlereinrichtung zur Umwandlung von analogen Sprachinformationsdaten in Schallwellen und umgekehrt aufweist.

Sprechstellen werden in vielen verschiedenen Bereichen eingesetzt, um eine zuverlässige Kommunikation zu gewährleisten. In Schienenfahrzeugen ermöglichen sie beispielsweise die Kommunikation zwischen Fahrgästen und Zugpersonal in Notfällen oder anderen Situationen.

Herkömmlicherweise sind die in einer Sprechanlageneinrichtung verwendeten Sprechstelleneinrichtungen kabelgebunden und bestehen aus einem Mikrofon, einem Lautsprecher und einer Sprechtaste. Viele Sprechstelleneinrichtungen sind so ausgestaltet, eingerichtet und in geeigneter Weise an einem vorgesehenen Verwendungsort angeordnet, dass nicht nur eine bidirektionale Kommunikation zwischen einem Benutzer der Sprechstelleneinrichtung und einem weiteren Benutzer an einer Gegensprecheinrichtung geführt werden kann, sondern dass beispielsweise ausgehend von einer Gegensprecheinrichtung Sprachinformationsdaten gleichzeitig an mehrere damit verbundene Sprechstelleneinrichtungen übertragen und dort als Schallwellen emittiert werden. Auf diese Weise kann über entsprechend eingerichtete Sprechanlageneinrichtungen auch eine unidirektionale Kommunikation durchgeführt werden und beispielsweise Ansagen und Informationen von einer einzigen Gegensprecheinrichtung über viele oder alle damit verbundenen Sprechstelleneinrichtungen akustisch wiedergegeben werden.

Der Einsatz von Sprechstellen ist jedoch nicht auf Schienenfahrzeuge beschränkt. Sprechstellen kommen in einer Vielzahl von Einsatzgebieten zur Anwendung. Neben Schienenfahrzeugen sind Sprechstellen auch auf Schiffen, Fähren und Flugzeugen weit verbreitet und dienen der Kommunikation zwischen Besatzungsmitgliedern und Passagieren. In Flughäfen, Bahnhöfen, U-Bahn-Stationen sowie auf Autobahnen und in Tunneln ermöglichen Sprechstellen die Kommunikation in Notfällen oder für den Zugang zu sicherheitsrelevanten Bereichen. Sprechstellen werden beispielsweise auch in Krankenhäusern, in Pflegeeinrichtungen, in Gefängnissen sowie bei der Feuerwehr und der Polizei eingesetzt, um schnelle Notfallkommunikation und Alarmierung zu ermöglichen. In Aufzügen und Parkhäusern ermöglichen Sprechstellen den Fahrgästen oder Nutzern, im Falle eines technischen Problems oder Notfalls schnell Hilfe zu rufen. In öffentlichen Gebäuden wie beispielsweise in Museen oder Behörden, aber auch in Wohn-, Büro- und Geschäftsgebäuden werden Sprechstellen beispielsweise zur Zugangskontrolle und internen Kommunikation verwendet. In Fabriken und sicherheitsrelevanten Bereichen wie beispielsweise in Chemieanlagen werden robuste Sprechstellen eingesetzt, um eine sichere und zuverlässige Kommunikation in lauten oder gefährlichen Umgebungen zu gewährleisten.

Sprechstellen in Schienenfahrzeugen sind weit verbreitet und ermöglichen es Fahrgästen, in Notfällen oder anderen Situationen mit dem Zugpersonal zu kommunizieren. Diese Sprechstellen sind üblicherweise an verschiedenen Stellen im Fahrzeug angebracht, wie in den Passagierabteilen oder in der Nähe von Notausgängen. Es ist bereits aus der Praxis bekannt, dass solche Sprechstellen auch zur akustischen Information der Fahrgäste verwendet werden können und Ansagen und Informationen über alle in dem Schienenfahrzeug an die Sprechanlageneinrichtung angeschlossenen und betriebenen Sprechstelleneinrichtungen für alle Fahrgäste hörbar wiedergegeben werden, beispielsweise während der Fahrt zu demnächst erreichten Bahnhöfen oder Anschlusstransportmöglichkeiten, aber auch zu außergewöhnlichen Ereignissen wie beispielsweise bei einem unvorhergesehenen Halt oder einer Verspätung.

Ein Hauptmerkmal der für derartige Sprechstellenanlagen verwendeten Sprechstelleneinrichtungen ist, dass sie regelmäßig auch aus Sicherheitsgründen über eine kabelgebundene Datenübertragungsleitung in der Sprechanlageneinrichtung untereinander bzw. mit einem zentralen Kommunikationssystem des Schienenfahrzeugs verbunden sind. Dies hat einige Einschränkungen, da die Interaktion regelmäßig nur auf die unmittelbare Sprechfunktion und eine akustische Wiedergabe über eine in der Sprechstelleneinrichtung angeordnete Schallwandlereinrichtung beschränkt ist. Für eine zusätzliche drahtlose Übertragung von Sprachdaten und Informationen, die moderne Kommunikationsanforderungen erfüllen, sind derartige Sprechstelleneinrichtungen nicht geeignet.

Für eine drahtlose Übertragung von Informationen an mobile Endgeräte von Fahrgästen in einem Schienenfahrzeug oder von Personen in Gebäuden, in Transportmitteln oder in anderen Umgebungen, in denen Sprechanlageneinrichtungen bereits verwendet werden, müssen üblicherweise geeignete Sende- und Empfangseinrichtungen angeordnet und betrieben werden, um Sprachinformationen oder andere Informationen zu mobilen Endgeräten zu übertragen oder von diesen zu empfangen.

Es wird deshalb als eine Aufgabe der Erfindung angesehen, eine drahtlose Übertragung von Daten und insbesondere von Sprachdaten an mobile Endgeräte möglichst kostengünstig bereit zu stellen.

Diese Aufgabe wird erfindungsgemäß dadurch gelöst, dass die Sprechstelleneinrichtung eine Sprachdatenwandlereinrichtung zur Umwandlung der Sprachinformationsdaten in einen drahtlos übertragbaren digitalen Sprachdatenstrom aufweist, und dass die Sprechstelleneinrichtung eine Sprachdatenstromübertragungseinrichtung mit einer Antenneneinrichtung zur drahtlosen Abstrahlung des digitalen Sprachdatenstroms aufweist. Die Integration der Sprachdatenwandlereinrichtung und der Sprachdatenstromübertragungseinrichtung in die Sprechstelleneinrichtung ermöglicht es, dass die Sprechstelleneinrichtung nicht nur für die herkömmliche Sprachkommunikation verwendet wird, sondern auch als drahtlose Schnittstelle dient. Auf diese Weise können beispielsweise in Schienenfahrzeugen den Fahrgästen relevante Informationen direkt auf ihre mobilen Endgeräte gesendet werden, wie etwa Sicherheitsinformationen oder Reisehinweise. Es ist nicht erforderlich, dass zusätzlich und unabhängig von einer Sprechanlageneinrichtung ein zweites drahtloses und digitales Kommunikationssystem errichtet und betrieben wird. Die Sprachdaten werden bei der Sprechanlageneinrichtung zuverlässig an alle angeschlossenen Sprechstelleneinrichtungen übertragen und stehen dort zur Verfügung. Die Integration, also die Anordnung der Sprachdatenwandlereinrichtung und der Sprachdatenstromübertragungseinrichtung in das Gehäuse der Sprechstelleneinrichtung und die funktionale Anbindung und Ertüchtigung dieser Komponenten ist ohne großen Herstellungsaufwand kostengünstig möglich. Es ist zusätzlich zu der Montage der ortsfest beispielsweise in einem Transportmittel oder in einem Gebäude angeordneten Sprechstelleneinrichtungen kein gesonderter Montageaufwand für die ortsfeste Anordnung der erforderlichen Komponenten für die drahtlose Übertragung des digitalen Sprachdatenstroms erforderlich. Es ist weiterhin kein zusätzlicher Raumbedarf für weitere Gehäuse oder einzelne Komponenten erforderlich, die in oder auf Wandflächen angeordnet und festgelegt werden müssten. Ein weiterer Vorteil wird darin gesehen, dass die Sprechstelleneinrichtungen üblicherweise so in der jeweiligen Verwendungsumgebung angeordnet sind, dass die Sprechstelleneinrichtungen nicht nur für Benutzer einfach zugänglich sind, sondern auch eine nicht oder nur wenig eingeschränkte oder behinderte und deshalb besonders weitreichende Abstrahlung des digitalen Sprachdatenstroms über die Antenne der Sprachdatenstromübertragungseinrichtung ermöglichen.

Einer als besonders vorteilhaft angesehenen Ausgestaltung des Erfindungsgedankens zufolge ist vorgesehen, dass die Sprachdatenwandlereinrichtung derart ausgestaltet und eingerichtet ist, dass mit der Sprachdatenwandlereinrichtung ein digitaler Sprachdatenstrom gemäß den standardisierten Vorgaben von Niedrigenergie-Bluetooth (im Folgenden als BLE bezeichnet) als Ausgangsdatenstrom erzeugbar ist, welcher der ebenfalls daran angepassten Sprachdatenstromübertragungseinrichtung zugeführt und mit der Sprachdatenstromübertragungseinrichtung abgestrahlt werden kann. Auf diese Weise kann der digitale Sprachdatenstrom gleichzeitig an mehrere digitale Endgeräte übertragen und dort empfangen und gespeichert oder wiedergegeben werden, sofern diese Endgeräte ebenfalls den standardisierten Vorgaben von BLE entsprechen. Auf diese Weise können beispielsweise mehrere Mobilfunkgeräte, aber auch geeignete Kopfhörer, Hörgeräte oder auch Tablets und Laptops gleichzeitig den mit der Sprachdatenstromübertragungseinrichtung ausgestrahlten Sprachdatenstrom gemäß BLE-Vorgaben empfangen und je nach einem individuell gewähltem Verwendungszweck speichern und später anzeigen oder aber akustisch wiedergeben. Insbesondere ist es mit einer derart betriebenen Sprechstelleneinrichtung möglich, nicht nur über die als Lautsprecher betriebene Schallwandlereinrichtung der Sprechstelleneinrichtung ein akustisches Signal auszugeben, sondern gleichzeitig auch einen digitalen Sprachdatenstrom als Auracast^{™}-Übermittlung gleichzeitig an mehrere digitale Endgeräte zu übertragen, die über Kopfhörer oder Hörgeräte eine akustische Wiedergabe und Informationsübermittlung an Personen ermöglichen, die entweder auf Grund von dauerhaften Einschränkungen oder während der Benutzung von Kopfhörern eine Sprachausgabe über die Schallwandlereinrichtung der Sprechstelleneinrichtung nicht wahrnehmen würden bzw. könnten.

Zweckmäßigerweise kann vorgesehen sein, dass die Sprachdatenwandlereinrichtung eine Sprachdatenwandlereinrichtungsschnittstelle aufweist, die derart eingerichtet und datenübertragend mit der Übertragungsschnittstelle oder mit einer zwischen der Übertragungsschnittstelle und der Schallwandlereinrichtung angeordneten Datenübertragungsleitung verbunden ist, dass mit der Sprachdatenwandlereinrichtungsschnittstelle der Sprachdatenwandlereinrichtung die analogen Sprachinformationsdaten als Eingangssignale zugeführt werden können. Alternativ oder zusätzlich kann auch optional vorgesehen sein, dass die Sprachdatenwandlereinrichtung eine Sprachdatenwandlereinrichtungsschnittstelle aufweist, die derart eingerichtet und datenübertragend mit der Übertragungsschnittstelle oder mit einer zwischen der Übertragungsschnittstelle und der Schallwandlereinrichtung angeordneten Datenübertragungsleitung verbunden ist, dass mit der Sprachdatenwandlereinrichtungsschnittstelle der Sprachdatenwandlereinrichtung die digitalen Sprachinformationsdaten als Eingangssignale zugeführt werden können. Die Ausgestaltung und Einbindung der Sprachdatenwandlereinrichtungsschnittstelle kann je nach Verwendungszweck oder den bestehenden Vorgaben durch die herkömmlichen und für die Integration der weiteren Komponenten verwendeten Sprechstelleneinrichtungen vorgegeben oder daran angepasst sein. Es ist ebenfalls möglich, die Ausgestaltung und Einbindung der Sprachdatenwandlereinrichtungsschnittstelle an die für den Betrieb der Sprechstelleneinrichtung verwendeten und an die Übertragungsschnittstelle übermittelten Sprachdaten und Datenübertragungsprotokolle anzupassen und entsprechende Vorgaben dahingehend zu berücksichtigen, dass eine möglichst zuverlässige und/oder möglichst kostengünstige Erweiterung der Funktionalität der herkömmlichen Sprechstelleneinrichtung auf die drahtlose Übermittlung des digitalen Sprachdatenstroms erweitert werden kann.

Um die Sprachdatenwandlereinrichtung und die Sprachdatenstromübertragungseinrichtung betreiben zu können müssen die Sprachdatenwandlereinrichtung und die Sprachdatenstromübertragungseinrichtung mit elektrischer Energie versorgt werden. Es kann vorgesehen sein, dass die elektrische Energie beispielsweise durch Batterien zur Verfügung gestellt wird, die in der Sprechstelleneinrichtung auswechselbar angeordnet sind. Es ist ebenfalls denkbar, durch ein gesondertes elektrisches Leitungsnetz die Sprechstelleneinrichtung oder die zusätzlichen Komponenten mit elektrischer Energie zu versorgen. Gemäß einer vorteilhaften Ausgestaltung des Erfindungsgedankens ist optional vorgesehen, dass die Übertragungsschnittstelle der Sprechstelleneinrichtung dazu eingerichtet ist, auch elektrische Energie von einer externen Energieversorgungseinrichtung zu der Sprechstelleneinrichtung zu übertragen, und dass die Übertragungsschnittstelle energieübertragend mit der Sprachdatenwandlereinrichtung und der Sprachdatenemissionseinrichtung verbunden ist. Auf diese Weise kann über die Übertragung der Sprachdaten verwendete kabelgebundene Kommunikationsleitung auch dazu verwendet werden, die für den Betrieb der Sprechstelleneinrichtung und insbesondere für den Betrieb der zusätzlichen Komponenten für die drahtlose Abstrahlung des digitalen Sprachdatenstroms erforderliche Energie bereits zu stellen und der Sprechstelleneinrichtung zuzuführen. Durch die energieübertragende Verbindung der Übertragungsschnittstelle mit der Sprachdatenwandlereinrichtung kann die der Sprechstelleneinrichtung kabelgebunden zugeführte elektrische Energie bei der Übertragungsschnittstelle von den Kommunikationssignalen getrennt und den energieverbrauchenden Komponenten zugeführt werden.

Um eine möglichst zuverlässige und effiziente Abstrahlung des digitalen Sprachdatenstroms aus der Sprechstelleneinrichtung zu ermöglichen ist es einer Ausgestaltung des Erfindungsgedankens zufolge vorgesehen, dass das Gehäuse der Sprechstelleneinrichtung einen Gehäusewandbereich aufweist, der bei einer bestimmungsgemäßen Montage der Sprechstelleneinrichtung für einen Benutzer der Sprechstelleneinrichtung sichtbar ist und der aus einem für den drahtlos abgestrahlten digitalen Sprachdatenstrom durchlässigen Material hergestellt ist. Einer Ausgestaltung des Erfindungsgedankens zufolge kann das gesamte Gehäuse der Sprechstelleneinrichtung aus einem geeigneten Kunststoffmaterial oder aus einem pflanzlichen Material wie etwa einem nachwachsenden Rohstoff hergestellt sein, wobei das Kunststoffmaterial oder das pflanzliche Material für elektromagnetische Wellen in dem Wellenlängenbereich transparent oder zumindest ausreichend durchlässig ist, der von der Sprachdatenstromübertragungseinrichtung für die drahtlose Abstrahlung des digitalen Sprachdatenstroms verwendet wird. Für die Abstrahlung von Bluetooth-Signalen und insbesondere für einen digitalen Sprachdatenstrom gemäß dem BLE-Standard ist dabei ein Wellenlängenbereich um etwa 12,5 cm bzw. entsprechend einer Frequenz von 2,4 GHz relevant.

Für viele Anwendungsbereiche ist es jedoch im Hinblick auf eine möglichst dauerhafte Ausgestaltung der Sprechstelleneinrichtung und zur Vermeidung einer Beschädigung durch die bestimmungsgemäße Nutzung in anspruchsvollen Umgebungen wie beispielsweise in einem Schienenfahrzeug, aber auch zur Eindämmung von Vandalismus zweckmäßig, das Gehäuse der Sprechstelleneinrichtung möglichst mechanisch stabil und belastbar auszugestalten. Für viele Verwendungsbereiche werden deshalb Sprechstelleneinrichtungen mit einem Gehäuse aus Metall als vorteilhaft angesehen. Ein Gehäuse aus Metall, welches die Antenne der Sprachdatenstromübertragungseinrichtung vollständig umgibt, bildet gleichzeitig eine Abschirmeinrichtung für elektromagnetische Wellen und würde regelmäßig eine weitreichende drahtlose Abstrahlung des digitalen Sprachdatenstroms verhindern. Einer vorteilhaften Ausgestaltung des Erfindungsgedankens zufolge ist deshalb vorgesehen, dass das Gehäuse der Sprechstelleneinrichtung überwiegend aus Metall hergestellt ist und lediglich ein verhältnismäßig kleiner Gehäusewandbereich nicht aus Metall, sondern aus einem geeigneten Kunststoffmaterial besteht. Es sind verschiedene Kunststoffmaterialien bekannt, die sowohl für elektromagnetische Wellen mit einer Frequenz von 2,4 GHz weitestgehend transparent sind, als auch gleichzeitig vorteilhafte stoß- und bruchfeste Eigenschaften aufweisen und für die Verwendung in Sprechstelleneinrichtungen deshalb besonders geeignet sind.

Dabei kann optional vorgesehen sein, dass der für den digitalen Sprachdatenstrom durchlässige Gehäusewandbereich als Bedientaste oder als eine die Bedientaste seitlich umgebende Bedientastenabschirmung ausgebildet ist. Mit einer die Bedientaste seitlich umgebende und in Richtung eines Benutzers der Sprechstelleneinrichtung vorspringend ausgebildeten Bedientastenabschirmung soll eine unbeabsichtigte Betätigung der Bedientaste verhindert werden. Die Bedientastenabschirmung kann aus einem geeigneten Kunststoffmaterial hergestellt sein und einen Bereich der Gehäusewand ersetzen oder auf einen die Bedientaste umgebenden Bereich der Gehäusewand aufgesetzt sein. In einem von außen unzugänglichen Innenraum der Bedientastenabschirmung kann die Antenne geschützt angeordnet sein. Die Bedientastenabschirmung kann ausreichend großflächig ausgebildet sein, sodass eine hohe Abstrahlungsleistung der Antenne durch das für die abgestrahlten elektromagnetischen Wellen durchlässige Material der Bedientastenabschirmung hindurch abgestrahlt werden kann und ausgehend von der Sprechstelleneinrichtung ein großer Umgebungsbereich von dem abgestrahlten digitalen Sprachdatenstrom abgedeckt werden kann.

Zweckmäßigerweise kann vorgesehen sein, dass die Antenne unmittelbar an oder in dem für den digitalen Sprachdatenstrom durchlässigen Gehäusewandbereich des Gehäuses der Sprechstelleneinrichtung angeordnet oder daran festgelegt oder darin eingebettet ist. Gegebenenfalls kann der betreffende Gehäusewandbereich bzw. die Bedientastenabschirmung eine elektrisch leitende Kontakteinrichtung oder eine Steckverbindung aufweisen, sodass die gesondert hergestellte und in dem Gehäusewandbereich bzw. in der Bedientastenabschirmung fest eingebaute Antenne über die Kontakteinrichtung oder die Steckverbindung mit der in dem Gehäuse angeordneten Sprachdatenstromübertragungseinrichtung verbunden werden kann.

Einer vorteilhaften Ausgestaltung des Erfindungsgedankens zufolge kann vorgesehen sein, dass die Sprachdatenwandlereinrichtung und/oder die Sprachdatenstromübertragungseinrichtung wahlweise aktivierbar oder deaktivierbar sind. Die wahlweise vorgebbare Aktivierung oder Deaktivierung der Sprachdatenwandlereinrichtung oder der Sprachdatenstromübertragungseinrichtung kann entweder mit Hilfe einer geeigneten Softwaresteuerung oder mit einer hardwaremäßig umgesetzten Trennschaltereinrichtung erfolgen. In beiden Fällen kann die zusätzliche Funktionalität der Erzeugung und Abstrahlung eines digitalen Sprachdatenstroms von der Sprechstelleneinrichtung entweder dauerhaft aktiviert oder deaktiviert werden, oder bei Bedarf beispielsweise für einzelne Durchsagen oder Zeiträume aktiviert und anschließend deaktiviert werden.

Es kann ebenfalls optional vorgesehen sein, dass zwischen der Übertragungsschnittstelle und der Sprachdatenwandlereinrichtung eine Trennschaltereinrichtung angeordnet ist, mit welcher die Übertragung von Sprachinformationsdaten und/oder elektrischer Energie von der Übertragungsschnittstelle zu der Sprachdatenwandlereinrichtung wahlweise ermöglicht oder verhindert wird. Die Trennschaltereinrichtung kann für eine ausschließlich manuelle Betätigung oder alternativ oder zusätzlich für eine automatisierte Betätigung und gegebenenfalls für eine automatisierte Steuerung und Betätigung über die Gegensprecheinrichtung ausgelegt sein. Die Sprechstelleneinrichtung kann einheitlich mit den für die Abstrahlung des digitalen Sprachdatenstroms zusätzlich erforderlichen Komponenten hergestellt und vor Ort montiert werden. Die zusätzliche Funktionalität kann dann gemäß individuellen Vorgaben freigeschaltet und dauerhaft aktiviert werden, oder aber abgeschaltet bleiben.

Nachfolgend werden Ausführungsbeispiele näher erläutert, die in den Zeichnungen schematisch dargestellt sind. Es zeigt:
Fig 1 eine schematische Ansicht einer Sprechanlageneinrichtung mit einer zentralen Gegensprecheinrichtung und mit mehreren räumlich verteilt angeordneten Sprechstelleneinrichtungen,
Fig. 2 eine Ansicht eines Gehäuses einer Sprechstelleneinrichtung mit einer Bedientaste und mit einer Bedientastenabschirmung,
Fig. 3 eine schematische Ansicht der verschiedenen Komponenten, die in der Sprechstelleneinrichtung angeordnet sind,
Fig. 4 eine schematische Ansicht eines Fahrgastraums in einem Schienenfahrzeugwagen eines Schienenfahrzeugs mit mehreren Sprechstelleneinrichtungen, die jeweils einen digitalen Sprachdatenstrom abstrahlen, der gleichzeitig von mehreren unterschiedlichen Empfängern empfangen und akustisch wiedergegeben werden kann.

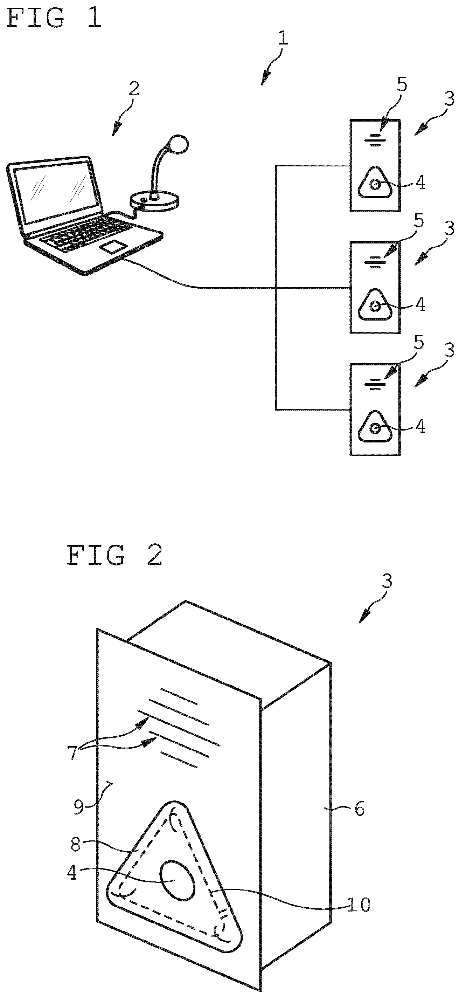

Eine in Fig. 1 exemplarisch und schematisch dargestellte Sprechanlageneinrichtung 1 weist eine zentrale Gegensprecheinrichtung 2 auf, die kabelgebunden und datenübertragend mit mehreren Sprechstelleneinrichtungen 3 verbunden ist. An jeder Sprechstelleneinrichtung 3 kann durch Drücken einer Bedientaste 4 eine Sprechverbindung mit der Gegensprecheinrichtung 2 aufgebaut und für eine Kommunikation mit der Gegensprecheinrichtung 2 genutzt werden. Jede Sprechstelleneinrichtung 3 weist eine Schallwandlereinrichtung 5 mit einem Lautsprecher und mit einem Mikrofon auf, sodass Sprache und Geräusche mit dem Mikrofon der Sprechstelleneinrichtung 3 aufgenommen und an die Gegensprecheinrichtung 2 übertragen werden können, und ebenso Sprache und Geräusche von der Gegensprecheinrichtung 2 über die Sprechverbindung an die Sprechstelleneinrichtung 3 übertragen und dort mit dem Lautsprecher akustisch wiedergegeben werden können. Es ist ebenfalls möglich, dass ausgehend von der Gegensprecheinrichtung 2 gleichzeitig eine Sprechverbindung mit allen angeschlossenen Sprechstelleneinrichtungen 3 aufgebaut wird und beispielsweise eine einheitliche Ansage oder Informationen an alle Sprechstelleneinrichtungen 3 übertragen und dort akustisch über die jeweiligen Lautsprecher wiedergegeben werden, ohne dass an einer Sprechstelleneinrichtung 3 eine Bedientaste 4 gedrückt und von der betreffenden Sprechstelleneinrichtung ausgehend eine einzelne Sprechverbindung mit der Gegensprecheinrichtung 2 aufgebaut werden muss.

In Fig. 2 ist beispielhaft eine Sprechstelleneinrichtung 3 dargestellt. Die Sprechstelleneinrichtung 3 weist ein ortsfest einbaubares Gehäuse 6 aus Metall auf. Hinter mehreren Lautsprecheröffnungen 7 ist die in Fig. 2 nicht sichtbare Schallwandlereinrichtung angeordnet. Die unterhalb der Lautsprecheröffnungen 7 angeordnete Bedientaste 4 ist von einer Bedientastenabschirmung 8 umgeben, welche über eine ebenflächige Vorderseite 9 des Gehäuses 6 vorspringt und die Bedientaste 4 so umgibt, dass eine unbeabsichtigte Fehlbetätigung der Bedientaste 4 weitestgehend verhindert werden kann. Die Bedientastenabschirmung 8 ist aus einem Kunststoffmaterial hergestellt. Innerhalb der Bedientastenabschirmung 8 ist eine in Fig. 2 durch eine gestrichelte Linie angedeutete Antenne 10 angeordnet und festgelegt. Die Antenne 10 ist damit außerhalb des metallischen Gehäuses 6 angeordnet und lediglich von einem für elektromagnetische Wellen in dem relevanten Wellenlängenbereich durchlässigen Kunststoffmaterial umgeben, sodass über die Antenne 10 ein digitaler Sprachdatenstrom in Form von elektromagnetischen Wellen mit einer Frequenz von beispielsweise 2,4 GHz ausgestrahlt werden können und der ausgestrahlte Sprachdatenstrom nicht von dem metallischen Gehäuse 6 abgeschirmt und innerhalb des metallischen Gehäuses 6 eingeschlossen wird.

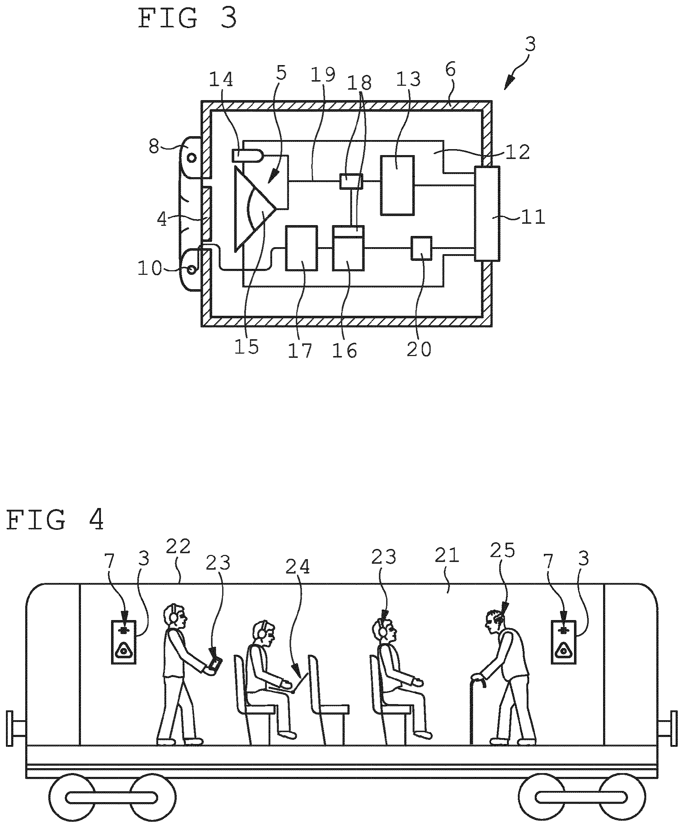

In Fig. 3 ist schematisch ein exemplarischer Aufbau der Sprechstelleneinrichtung 3 schematisch dargestellt. Das Gehäuse 6 weist eine Übertragungsschnittstelle 11 zur Übertragung von digitalen Sprachinformationsdaten zwischen der Sprechstelleneinrichtung 3 und der Gegensprecheinrichtung 2 auf. Die Übertragungsschnittstelle 11 kann eine einheitliche Steckverbindung oder mehrere getrennte Steckverbindungen für datenübertragende kabelgebundene Leitungen und für eine Verbindung mit einer elektrischen Energieversorgung aufweisen.

Das Gehäuse 6 weist an der Vorderseite die Bedientaste 4 und die Bedientastenabschirmung 8 auf, die über die Vorderseite 9 des Gehäuse 6 vorspringt und die Bedientaste 4 abschirmt. In der Bedientastenabschirmung 8 ist die Antenne 10 angeordnet.

Auf einer Platine 12 sind eine Wandlereinrichtung 13 zur Umwandlung der digitalen Sprachinformationsdaten in analoge Sprachinformationsdaten angeordnet. An der Platine 12 ist die Schallwandlereinrichtung 5 mit einem Lautsprecher 14 und einem Mikrofon 15 zur Umwandlung von analogen Sprachinformationsdaten in Schallwellen und umgekehrt festgelegt und mit der Wandlereinrichtung 13 verbunden. Weiterhin sind auf der Platine 12 eine Sprachdatenwandlereinrichtung 16 zur Umwandlung der Sprachinformationsdaten in einen drahtlos übertragbaren digitalen Sprachdatenstrom und eine Sprachdatenstromübertragungseinrichtung 17 zur drahtlosen Abstrahlung des digitalen Sprachdatenstroms angeordnet. Die Sprachdatenwandlereinrichtung 16 ist derart ausgestaltet und eingerichtet, dass mit der Sprachdatenwandlereinrichtung 16 ein digitaler Sprachdatenstrom gemäß den standardisierten Vorgaben von Niedrigenergie-Bluetooth (BLE) als Ausgangsdatenstrom erzeugt werden kann, welcher der Sprachdatenstromübertragungseinrichtung 17 zugeführt und mit der Sprachdatenstromübertragungseinrichtung 17 abgestrahlt werden kann. Die Sprachdatenstromübertragungseinrichtung 17 ist zu diesem Zweck mit der Antenne 10 verbunden. Mit der Sprachdatenstromübertragungseinrichtung 17 können auch gleichzeitig mehrere drahtlos datenübertragende Verbindungen zu verschiedenen digitalen Endgeräten aufgebaut und aufrechterhalten werden.

Die Sprachdatenwandlereinrichtung 16 weist eine Sprachdatenwandlereinrichtungsschnittstelle 18 auf, die derart eingerichtet und datenübertragend mit der Übertragungsschnittstelle 11 oder mit der Wandlereinrichtung 13 oder mit einer zwischen der Übertragungsschnittstelle 11 und der Schallwandlereinrichtung 5 angeordneten Datenübertragungsleitung 19 verbunden ist, dass mit der Sprachdatenwandlereinrichtungsschnittstelle 18 der Sprachdatenwandlereinrichtung 16 die analogen Sprachinformationsdaten als Eingangssignale zugeführt werden können.

Die Übertragungsschnittstelle 11 der Sprechstelleneinrichtung 3 ist dazu eingerichtet, auch elektrische Energie von einem externen und in Fig. 3 nicht dargestellten Energieversorgungsnetz zu der Sprechstelleneinrichtung 3 zu übertragen. Die Übertragungsschnittstelle 11 ist energieübertragend mit der Sprachdatenwandlereinrichtung 16 und darüber auch mit der Sprachdatenstromübertragungseinrichtung 18 verbunden, sodass diese Komponenten mit elektrischer Energie versorgt werden und betrieben werden können.

Zwischen der Übertragungsschnittstelle 11 und der Sprachdatenwandlereinrichtung 16 ist eine Trennschaltereinrichtung 20 angeordnet, mit welcher die Übertragung von elektrischer Energie von der Übertragungsschnittstelle 11 zu der Sprachdatenwandlereinrichtung 11 wahlweise ermöglicht oder verhindert werden kann. Auf diese Weise können die Sprachdatenwandlereinrichtung 16 und die Sprachdatenstromübertragungseinrichtung 18 entweder deaktiviert und stillgelegt werden, oder aber in Betrieb genommen und für die Ausstrahlung eines digitalen Sprachdatenstroms verwendet werden.

In Fig. 4 ist exemplarisch und schematisch die Verwendung einer derartigen Sprechanlageneinrichtung 1 in einem Fahrgastraum 21 in einem Schienenfahrzeugwagen 22 eines Schienenfahrzeugs dargestellt. In dem Fahrgastraum 21 sind an gegenüberliegenden Enden zwei Sprechstelleneinrichtungen 3 in eine Fahrgastraumwand eingesetzt, sodass die Bedientaste 4 zugänglich und die Lautsprecheröffnungen 7 in den Fahrgastraum 21 hinein gerichtet sind. Der von den beiden Sprechstelleneinrichtungen 3 gleichzeitig ausgestrahlte digitale Sprachdatenstrom kann gleichzeitig von mehreren unterschiedlichen Empfängern 23, 24, 25 empfangen und akustisch wiedergegeben werden. Die Empfänger 23, 24, 25 können dabei beispielsweise unterschiedliche Mobilfunkgeräte 23, Laptops 24 oder Hörgeräte 25 sein. Mit solchen erfindungsgemäß eingerichteten Sprechstelleneinrichtungen 3 können Sprachinformationen in Form eines gemäß den standardisierten Vorgaben von Niedrigenergie-Bluetooth (BLE) erzeugten digitalen Sprachdatenstroms an Fahrgäste übermittelt werden, die anderenfalls keine akustische Wiedergabe der Sprachinformationen über die Lautsprecher 14 der Sprechstelleneinrichtungen 3 wahrnehmen würden oder wahrnehmen könnten.

## Patentansprüche

1. Sprechstelleneinrichtung (3) zur Verwendung in einer Sprechanlageneinrichtung (1), wobei die Sprechstelleneinrichtung (3) ein ortsfest einbaubares Gehäuse (6), eine Übertragungsschnittstelle (11) zur Übertragung von digitalen Sprachinformationsdaten zwischen der Sprechstelleneinrichtung (3) und einer Gegensprecheinrichtung (2), eine Wandlereinrichtung (13) zur Umwandlung der digitalen Sprachinformationsdaten in analoge Sprachinformationsdaten und eine Schallwandlereinrichtung (5) zur Umwandlung von analogen Sprachinformationsdaten in Schallwellen und umgekehrt aufweist, **dadurch gekennzeichnet, dass** die Sprechstelleneinrichtung (3) eine Sprachdatenwandlereinrichtung (16) zur Umwandlung der Sprachinformationsdaten in einen drahtlos übertragbaren digitalen Sprachdatenstrom aufweist, und dass die Sprechstelleneinrichtung (3) eine Sprachdatenstromübertragungseinrichtung (17) mit einer Antenneneinrichtung zur drahtlosen Abstrahlung des digitalen Sprachdatenstroms aufweist.

2. Sprechstelleneinrichtung (3) nach Anspruch 1, **dadurch gekennzeichnet, dass** die Sprachdatenwandlereinrichtung (16) derart ausgestaltet und eingerichtet ist, dass mit der Sprachdatenwandlereinrichtung (16) ein digitaler Sprachdatenstrom gemäß den standardisierten Vorgaben von Niedrigenergie-Bluetooth (BLE) als Ausgangsdatenstrom erzeugbar ist, welcher der Sprachdatenstromübertragungseinrichtung (17) zugeführt und mit der Sprachdatenstromübertragungseinrichtung (17) abgestrahlt werden kann.

3. Sprechstelleneinrichtung (3) nach Anspruch 1 oder Anspruch 2, **dadurch gekennzeichnet, dass** die Sprachdatenwandlereinrichtung (16) eine Sprachdatenwandlereinrichtungsschnittstelle (18) aufweist, die derart eingerichtet und datenübertragend mit der Übertragungsschnittstelle (11) oder mit der Wandlereinrichtung (13) oder mit einer zwischen der Übertragungsschnittstelle (11) und der Schallwandlereinrichtung (5) angeordneten Datenübertragungsleitung (19) verbunden ist, dass mit der Sprachdatenwandlereinrichtungsschnittstelle (18) der Sprachdatenwandlereinrichtung (16) die analogen Sprachinformationsdaten als Eingangssignale zugeführt werden können.

4. Sprechstelleneinrichtung (3) nach Anspruch 1 oder Anspruch 2, **dadurch gekennzeichnet, dass** die Sprachdatenwandlereinrichtung (16) eine Sprachdatenwandlereinrichtungsschnittstelle (18) aufweist, die derart eingerichtet und datenübertragend mit der Übertragungsschnittstelle (11) oder mit der Wandlereinrichtung (13) oder mit einer zwischen der Übertragungsschnittstelle (11) und der Schallwandlereinrichtung (5) angeordneten Datenübertragungsleitung (19) verbunden ist, dass mit der Sprachdatenwandlereinrichtungsschnittstelle (18) der Sprachdatenwandlereinrichtung (16) die digitalen Sprachinformationsdaten als Eingangssignale zugeführt werden können.

5. Sprechstelleneinrichtung (3) nach einem der voranstehenden Ansprüche, **dadurch gekennzeichnet, dass** die Übertragungsschnittstelle (11) der Sprechstelleneinrichtung (3) dazu eingerichtet ist, auch elektrische Energie zu der Sprechstelleneinrichtung (3) zu übertragen, und dass die Übertragungsschnittstelle (11) energieübertragend mit der Sprachdatenwandlereinrichtung (16) und der Sprachdatenstromübertragungseinrichtung (17) verbunden ist.

6. Sprechstelleneinrichtung (3) nach einem der voranstehenden Ansprüche, **dadurch gekennzeichnet, dass** das Gehäuse (6) der Sprechstelleneinrichtung (3) einen Gehäusewandbereich aufweist, der bei einer bestimmungsgemäßen Montage der Sprechstelleneinrichtung (3) für einen Benutzer der Sprechstelleneinrichtung (3) sichtbar ist und der aus einem für den drahtlos abgestrahlten digitalen Sprachdatenstrom durchlässigen Material hergestellt ist.

7. Sprechstelleneinrichtung (3) nach Anspruch 6, **dadurch gekennzeichnet, dass** der für den digitalen Sprachdatenstrom durchlässige Gehäusewandbereich als Bedientaste (4) oder als eine die Bedientaste (4) seitlich umgebende Bedientastenabschirmung (8) ausgebildet ist.

8. Sprechstelleneinrichtung (3) nach Anspruch 6 oder Anspruch 7, **dadurch gekennzeichnet, dass** die Antenne (10) unmittelbar an oder in dem für den digitalen Sprachdatenstrom durchlässigen Gehäusewandbereich des Gehäuses (6) der Sprechstelleneinrichtung (3) angeordnet oder daran festgelegt oder darin eingebettet ist.

9. Sprechstelleneinrichtung (3) nach einem der voranstehenden Ansprüche, **dadurch gekennzeichnet, dass** die Sprachdatenwandlereinrichtung (16) und/oder die Sprachdatenstromübertragungseinrichtung (17) wahlweise aktivierbar oder deaktivierbar sind.

10. Sprechstelleneinrichtung (3) nach Anspruch 9, **dadurch gekennzeichnet, dass** zwischen der Übertragungsschnittstelle (11) und der Sprachdatenwandlereinrichtung (16) eine Trennschaltereinrichtung (20) angeordnet ist, mit welcher die Übertragung von Sprachinformationsdaten und/oder elektrischer Energie von der Übertragungsschnittstelle (11) zu der Sprachdatenwandlereinrichtung (16) wahlweise ermöglicht oder verhindert wird.
